# EUROPEAN PATENT APPLICATION

(11) **EP 4 722 164 A1**
(43) Date of publication of application: **08.04.2026**
(21) Application number: 24943681.7
(22) Date of filing: 30.09.2024
(51) Int. Cl.: C01G 53/00, H01M 4/36, H01M 4/525, H01M 4/505, H01M 4/131, H01M 10/0525, H01M 10/054, B82Y 30/00, B82Y 40/00

(54) **POSITIVE ELECTRODE MATERIAL PRECURSOR, PREPARATION METHOD THEREFOR, AND USE THEREOF**

(30) Priority: 04.07.2024 CN 202410894673
(71) Applicant: Ningbo Ronbay New Energy Technology Co., Ltd., Yuyao Ningbo, Zhejiang 315402 (CN)
(72) Inventor: LUO, Mingming, Zhejiang 315402 (CN); XU, Qiansong, Zhejiang 315402 (CN); YU, Jianfei, Zhejiang 315402 (CN); LIANG, Liangiang, Zhejiang 315402 (CN)
(74) Representative: J A Kemp LLP
(86) International application number: PCT/CN2024/122965
(87) International publication number: WO 2026/007256

(57) **Abstract**

The present application relates to a positive electrode material precursor and a preparation method thereof and an application thereof. The positive electrode material precursor is a core-shell structure, including an inner core, an outer shell, and an intermediate layer provided between the inner core and the outer shell; where the inner core is formed by accumulating a first sheet-like material, and the first sheet-like material is formed by stacking a plurality of layers of a primary sheet-like material; the intermediate layer is formed by accumulating the primary sheet-like material; the outer shell is formed by accumulating a second sheet-like material, and the second sheet-like material is formed by stacking a plurality of layers of the primary sheet-like material; and a layer number of the layers of the primary sheet-like material in the second sheet-like material is less than a layer number of the layers of the primary sheet-like material in the first sheet-like material; the positive electrode material precursor has a specific surface area of 10 m²/g to 20 m²/g. The precursor described in the present application has a unique structure with compact inner core and outer shell, and the loose intermediate layer, and has a large specific surface area, resulting in a high tap density and a sintering yield when it is used to prepare a positive electrode material, and excellent cycle stability and rate capability can be achieved when it is used in a battery.

## Description

The present application claims priority to a Chinese Patent Application No. 202410894673.X, filed with China National Intellectual Property Administration on July 4, 2024, entitled "positive electrode material precursor and preparation method and application thereof". The aforementioned patent application is hereby incorporated by reference in its entirety.

### TECHNICAL FIELD

The present application relates to the technical field of batteries, and in particular, to a positive electrode material precursor and a preparation method thereof and an application thereof.

### BACKGROUND

The performance of positive electrode materials is largely determined by their precursors. Since a precursor with particles having dense interiors has a small specific surface area, and a corresponding positive electrode material with a small specific surface area has a small contact area with an electrolyte solution, resulting in lower rate capability of a battery. Although refining primary particles may increase the specific surface area of the precursor, the refined primary particles are prone to breakage, and the resulting debris will be over-sintered during a sintering process, and the sintered positive electrode material is prone to breakage due to a low strength of the damaged primary particles during the sintering process. The over-sintered debris and broken positive electrode material may easily react with the electrolyte solution during a charging and discharging process of the battery, thereby reducing the electrical performance of the battery and posing safety hazards.

### SUMMARY

Based on this, it is necessary to provide a positive electrode material precursor and a preparation method thereof and an application thereof to address the aforementioned problems. The precursor has a unique structure with compact inner core and outer shell and a loose intermediate layer, and has a large specific surface area, resulting in a high tap density and a high sintering yield when the precursor is used to prepare a positive electrode material, and excellent cycle stability and rate capability can be achieved when the resulting positive electrode material is used in a battery.

A positive electrode material precursor is provided, where the positive electrode material precursor is a core-shell structure, including an inner core, an outer shell, and an intermediate layer provided between the inner core and the outer shell;
where the inner core is formed by accumulating a first sheet-like material, and the first sheet-like material is formed by stacking a plurality of layers of a primary sheet-like material;
the intermediate layer is formed by accumulating the primary sheet-like material;
the outer shell is formed by accumulating a second sheet-like material, and the second sheet-like material is formed by stacking a plurality of layers of the primary sheet-like material, and a layer number of the layers of the primary sheet-like material in the second sheet-like material is less than a layer number of the layers of the primary sheet-like material in the first sheet-like material;
the positive electrode material precursor has a specific surface area of 10m²/g-20m²/g.

In one embodiment, the layer number of the layers of the primary sheet-like material in the first sheet-like material is greater than or equal to 5.

In one embodiment, a porosity of the inner core is less than a porosity of the outer shell, and the porosity of the outer shell is less than a porosity of the intermediate layer.

In one embodiment, the positive electrode material precursor satisfies at least one of the following conditions:
(1) the positive electrode material precursor has a porosity of 5%-10%;
(2) the porosity of the inner core is less than or equal to 2%;
(3) the porosity of the intermediate layer is 10%-12%; and
(4) the porosity of the outer shell is 5%-8%.

In one embodiment, the positive electrode material precursor further satisfies at least one of the following conditions:
(1) the first sheet-like material has an average thickness of 130nm-170nm;
(2) the primary sheet-like material in the intermediate layer has an average thickness of less than or equal to 60 nm;
(3) the second sheet-like material has an average thickness of 70 nm-120 nm;
(4) the inner core has a diameter of 3 µm-7 µm;
(5) the intermediate layer has a thickness of 1 µm-2.5 µm;
(6) the outer shell has a thickness of 1 µm-4 µm; and
(7) the positive electrode material precursor has a diameter of 7 µm-20 µm.

In one embodiment, in an X-ray diffraction pattern of the positive electrode material precursor, at least one of the following conditions is satisfied:
(1) a (001) crystal plane has a diffraction peak intensity of greater than or equal to 7000 cps, and along a direction perpendicular to the (001) crystal plane, crystal particles of the positive electrode material precursor have an average size of greater than or equal to 10 nm;
(2) a (101) crystal plane has a diffraction peak intensity of greater than or equal to 7000 cps, and along a direction perpendicular to the (101) crystal plane, the crystal particles of the positive electrode material precursor have an average size of greater than or equal to 10 nm; and
(3) a (100) crystal plane has a diffraction peak intensity of greater than or equal to 4000 cps, and along a direction perpendicular to the (100) crystal plane, the crystal particles of the positive electrode material precursor have an average size of greater than or equal to 25 nm.

In one embodiment, the positive electrode material precursor has a chemical formula of NiₓCo_{y}Mn_{z}(OH)₂, where 0.5≤x≤0.95, 0≤y≤0.25, 0≤z≤0.25, x+y+z=1, and y and z are not all zero.

A preparation method for the positive electrode material precursor as described above, including the following steps:
mixing the ammonia aqueous solution and the sodium hydroxide solution to separately obtain a first reaction base solution and a second reaction base solution, where ammonia concentrations of the first reaction base solution and the second reaction base solution are c₁ and c₂, respectively, and c₁ < c₂;
co-currently introducing the ammonia aqueous solution, the sodium hydroxide solution and the mixed salt solution into the first reaction base solution to perform a first reaction to obtain the inner core, where the mixed salt solution has a flow rate of 200 L/h-400 L/h, a reaction solution in the first reaction has an ammonia concentration of c₁, and a reaction temperature is T₁;
mixing the inner core with the second reaction base solution, and co-currently introducing the ammonia aqueous solution, the sodium hydroxide solution and the mixed salt solution to perform a second reaction to obtain an intermediate, where the mixed salt solution has flow rate of 1000 L/h-1500 L/h, a reaction solution in the second reaction has an ammonia concentration of c₂, and a reaction temperature is T₂;
further co-currently introducing the ammonia aqueous solution, the sodium hydroxide solution and the mixed salt solution to perform a third reaction to obtain the positive electrode material precursor, where the mixed salt solution has a flow rate of 400 L/h-800 L/h, a reaction solution in the third reaction has an ammonia concentration of c₁, a reaction temperature is T₃, and T₂ < T₃ < T₁.

In one embodiment, the first reaction, the second reaction, and the third reaction satisfy at least one of the following conditions:
(1) a pH of the first reaction base solution is greater than a pH of the second reaction base solution;
(2) a pH of the reaction solution in the first reaction is greater than a pH of the reaction solution in the second reaction;
(3) a pH of the reaction solution at an end of the second reaction is equal to a pH of the reaction solution in the third reaction;
(4) a stirring speed in the first reaction is greater than a stirring speed in the second reaction;
(5) the stirring speed in the second reaction is greater than a stirring speed in the third reaction.

In one embodiment, the preparation method satisfies at least one of the following conditions:
(1) the first reaction base solution has a pH of 12.1-12.3, and c₁ is 1 g/L-4 g/L;
(2) the second reaction base solution has a pH of 11.1-11.3, and c₂ is 5 g/L-8 g/L;
(3) in the step of the first reaction, T₁ is 55 °C-60 °C, the stirring speed is 400 r/min-500 r/min, the reaction solution has a pH of 11.5-12.3, and the inner core has a diameter of 3 µm-7 µm;
(4) in the step of the second reaction, T₂ is 40 °C-50 °C, the stirring speed is 200 r/min-350 r/min, the reaction solution has a pH of 10.5-10.6 at the end of the reaction, and the intermediate has a diameter of 5 µm-12 µm;
(5) in the step of the third reaction, T₃ is 50 °C-55 °C, the stirring speed is 180 r/min-200 r/min, the reaction solution has a pH of 10.5-10.6, and the positive electrode material precursor has a diameter of 7 µm-20 µm.

In one embodiment, the preparation method further satisfies at least one of the following conditions:
(1) the ammonia aqueous solution has a concentration of 5 mol/L-15 mol/L;
(2) the sodium hydroxide solution has a concentration of 9 mol/L-12 mol/L;
(3) the mixed salt solution has a concentration of 1.5 mol/L-2.5 mol/L;
(4) in the step of the first reaction, the pH of the reaction solution is first maintained at 12.1-12.3 for 1-4 hours, and then is reduced to 11.5-11.8 over 6-8 hours;
(5) in the step of mixing the inner core with the second reaction base solution, a solid content is 10 g/L-100 g/L;
(6) the preparation method is performed under a protective atmosphere, with an oxygen content of less than or equal to 0.1% and a pressure of 0.2 MPa-0.7 MPa.

A positive electrode material, prepared from the positive electrode material precursor as described above, is provided.

A positive electrode sheet is provided, including a positive electrode current collector and a positive electrode material layer provided on a surface of the positive electrode current collector, where the positive electrode material layer includes the positive electrode material as described above.

A battery is provided, including the positive electrode sheet as described above.

In the positive electrode material precursor described in the present application, three different spatial structures composed of a primary sheet-like material from inner to outer are included, so that the precursor has a unique structure with compact inner core and outer shell and a loose intermediate layer, and at the same time, the specific surface area of the precursor is as high as 10m²/g-20m²/g. On one hand, this may not only effectively prevent problems such as peeling of primary sheet-like material under external force to form crystal nuclei and over-sintering, but also may be conducive to ion diffusion during the preparation of the positive electrode material, thereby increasing the sintering yield; on the other hand, this may increase the tap density of the precursor, and is conducive to improving a structural strength of the positive electrode material, buffering a volume change of the positive electrode material during a charging and discharging process; and at the same time, this may increase a contact area between the positive electrode material and the electrolyte solution, thereby improving the cycle stability and rate capability of the battery.

### BRIEF DESCRIPTION OF DRAWINGS

To describe the technical solutions in embodiments of the present application or in the prior art more clearly, the following briefly introduces the accompanying drawings needed for describing the embodiments or the prior art. Apparently, the accompanying drawings in the following description illustrate merely some embodiments of the present application, and persons of ordinary skill in the art may still derive other drawings from these accompanying drawings without creative effort.
FIG. 1 is a cross-sectional SEM image of a positive electrode material precursor prepared in Example 1, where an area a represents an inner core, an area b represents an intermediate layer, and an area c represents an outer shell.
FIG. 2 is a surface SEM image of the inner core prepared in Example 1.
FIG. 3 is a surface SEM image of the intermediate layer prepared in Example 1.
FIG. 4 is a surface SEM image of the positive electrode material precursor prepared in Example 1.
FIG. 5 is an X-ray diffraction pattern of the positive electrode material precursor prepared in Example 1.
FIG. 6 is a cross-sectional SEM image of a positive electrode material precursor prepared in Comparative Example 1.
FIG. 7 is a surface SEM image of the positive electrode material precursor prepared in Comparative Example 1.

### DESCRIPTION OF EMBODIMENTS

To facilitate understanding of the present application, the following clearly describes the present application. However, it should be understood that the present application may be embodied in many different forms and is not limited to the embodiments or examples described herein. On the contrary, an object of providing these embodiments or examples is to provide a thorough and comprehensive understanding of the disclosure of the present application.

Unless otherwise defined, all technical and scientific terms used herein have the same meanings as commonly understood by those skilled in the art to which the present application pertains. The terms used in the specification of the present application are intended solely for an object of describing specific embodiments or examples and are not intended to limit the scope of the present application.

The present application provides a positive electrode material precursor, where the positive electrode material precursor is a core-shell structure, including an inner core, an outer shell, and an intermediate layer provided between the inner core and outer shell.

Where, the inner core is formed by accumulating a first sheet-like material, and the first sheet-like material is formed by stacking a plurality of layers of a primary sheet-like material; the intermediate layer is formed by accumulating the primary sheet-like material; the outer shell is formed by accumulating a second sheet-like material, and the second sheet-like material is formed by stacking a plurality of layers of the primary sheet-like material, and a layer number of the layers of the primary sheet-like material in the second sheet-like material is less than a layer number of the layers of the primary sheet-like material in the first sheet-like material; the positive electrode material precursor has a specific surface area of 10m²/g-20m²/g.

In the positive electrode material precursor described in the present application, three different spatial structures composed of a primary sheet-like material from inner to outer are included, so that the precursor has a unique structure in which an inner core and an outer shell are compact and an intermediate layer is loose, and at the same time, the specific surface area of the precursor is as high as 10m²/g-20m²/g. On one hand, this may not only effectively prevent problems such as peeling of primary sheet-like material under external force to form crystal nuclei and over-sintering, but also may be conducive to ion diffusion during the preparation of the positive electrode material, thereby increasing the sintering yield; on the other hand, this may increase the tap density of the precursor, and is conducive to improving a structural strength of the positive electrode material, buffering a volume change of the positive electrode material during a charging and discharging process; and at the same time, this may increase a contact area between the positive electrode material and the electrolyte solution, thereby improving the cycle stability and rate capability of the battery.

Preferably, the positive electrode material precursor has a specific surface area of 10m²/g-15m²/g.

In one embodiment, the layer number of the layers of the primary sheet-like material in the first sheet-like material is greater than or equal to 5, preferably 6-10. It is understood that at this time, the layer number of the layers of the primary sheet-like material in the second sheet-like material is less than 5. Further preferably, the first sheet-like material has an average thickness of 130 nm-170 nm, more preferably 140 nm-160 nm, and/or, the second sheet-like material has an average thickness of 70 nm-120 nm, more preferably 80 nm-110 nm, and/or, the primary sheet-like material in the intermediate layer has an average thickness of less than or equal to 60 nm, more preferably 40 nm-60 nm. By adjusting the layer number of the layers of the primary sheet-like material in the first sheet-like material and the second sheet-like material, as well as the thickness sizes of the primary sheet-like material in the first sheet-like material, the second sheet-like material, and the intermediate layer, this is conducive to further precisely adjusting the structure of the precursor, thereby enhancing structural stability, while ensuring a high specific surface area of the precursor.

In one embodiment, a porosity of the inner core is less than a porosity of the outer shell, and the porosity of the outer shell is less than a porosity of the intermediate layer. Preferably, the porosity of the positive electrode material precursor is 5%-10%, more preferably 5%-8%. Further preferably, the porosity of the inner core is less than or equal to 2%, more preferably 1.5%-2%, and/or the porosity of the intermediate layer is 10%-12%, more preferably 10.5%-11.5%, and/or the porosity of the outer shell is 5%-8%, more preferably 5.5%-7.5%. By adjusting the porosities of the precursor, the inner core, the intermediate layer, and the outer shell of the precursor, this is conducive to further optimizing the unique structure in which the inner core and outer shell are compact and the intermediate layer loose, thereby enhancing the sintering yield of the positive electrode material, while improving the cycle stability and rate capability of the battery.

In one embodiment, the positive electrode material precursor has a diameter of 7 µm-20 µm, more preferably 10 µm-15 µm. Preferably, the inner core has a diameter of 3 µm-7 µm, more preferably 4 µm-6 µm, and/or the intermediate layer has a thickness of 1 µm-2.5 µm, more preferably 1.5 µm-2 µm, and/or the outer shell has a thickness of 1 µm-4 µm, more preferably 1 µm-2.5 µm. By adjusting the size of the precursor and the thicknesses of the inner core, the intermediate layer, and the outer shell of the precursor, this is conducive to further optimizing the structure of the precursor, thereby enhancing activity and stability of the precursor.

In one embodiment, in an X-ray diffraction pattern of the positive electrode material precursor, a (001) crystal plane has a diffraction peak intensity of greater than or equal to 7000 cps, preferably 7500 cps-9000 cps; and along a direction perpendicular to the (001) crystal plane, crystal particles of the positive electrode material precursor have an average size of greater than or equal to 10 nm, preferably 10 nm-15 nm .

In one embodiment, in a X-ray diffraction pattern of the positive electrode material precursor, a (101) crystal plane has a diffraction peak intensity of greater than or equal to 7000 cps, preferably 7000 cps-8500 cps; and along a direction perpendicular to the (101) crystal plane, crystal particles of the positive electrode material precursor have an average size of greater than or equal to 10 nm, preferably 10 nm-15 nm.

In one embodiment, in a X-ray diffraction pattern of the positive electrode material precursor, a (100) crystal plane has a diffraction peak intensity of greater than or equal to 4000 cps, preferably 4000 cps-6000 cps; and along a direction perpendicular to the (100) crystal plane, crystal particles of the positive electrode material precursor have an average size of greater than or equal to 25 nm, preferably 30 nm-40 nm.

By adjusting the diffraction peak intensities of the (001), (101) and (100) crystal planes in the positive electrode material precursor and their corresponding crystal particle sizes, it is conducive to improving the structural stability.

In one embodiment, the positive electrode material precursor has a chemical formula of NiₓCo_{y}Mn_{z}(OH)₂, where 0.5≤x≤0.95, 0≤y≤0.25, 0≤z≤0.25, x+y+z=1, and y and z are not all zero. Preferably, 0.8≤x≤0.94, 0.03≤y≤0.1, and 0.03≤z≤0.1. It is understood that the positive electrode material precursor may also contain a dopant element, and the present application is not limited thereto.

The present application provides a preparation method for the positive electrode material precursor as described above, including the following steps:
S1, preparing an ammonia aqueous solution, a sodium hydroxide solution, and a mixed salt solution;
S2, mixing the ammonia aqueous solution and the sodium hydroxide solution to separately obtain a first reaction base solution and a second reaction base solution, where ammonia concentrations of the first reaction base solution and the second reaction base solution are c₁ and c₂, respectively, and c₁ < c₂;
S3, co-currently introducing the ammonia aqueous solution, the sodium hydroxide solution and the mixed salt solution into the first reaction base solution to perform a first reaction to obtain the inner core, where the mixed salt solution has a flow rate of 200 L/h-400 L/h, a reaction solution in the first reaction has an ammonia concentration of c₁, and a reaction temperature is T₁;
S4, mixing the inner core with the second reaction base solution, and co-currently introducing the ammonia aqueous solution, the sodium hydroxide solution and the mixed salt solution to perform a second reaction to obtain an intermediate, where the mixed salt solution has a flow rate of 1000 L/h-1500 L/h, a reaction solution in the second reaction has an ammonia concentration of c₂, and a reaction temperature is T₂;
S5, further co-currently introducing the ammonia aqueous solution, the sodium hydroxide solution and the mixed salt solution to perform a third reaction to obtain the positive electrode material precursor, where the mixed salt solution has a flow rate of 400 L/h-800 L/h, a reaction solution in the third reaction has an ammonia concentration of c₁, a reaction temperature is T₃, and T₂ < T₃ < T₁.

In step S1, the ammonia aqueous solution has a concentration of 5 mol/L-15 mol/L, preferably 7 mol/L-12 mol/L; and/or, the sodium hydroxide solution has a concentration of 9 mol/L-12 mol/L, preferably 10 mol/L-11 mol/L; and/or the mixed salt solution has a concentration of 1.5 mol/L-2.5 mol/L, preferably 1.8 mol/L-2 mol/L.

It is understood that the mixed salt solution contains at least Ni, Co, Mn, and may contain other dopant elements, and the present application is not limited thereto.

In step S2, it is preferred that the first reaction base solution has a pH greater than that of the second reaction base solution. More preferably, the first reaction base solution has a pH of 12.1-12.3, and c₁ is 1 g/L-4 g/L; and/or, the second reaction base solution has a pH of 11.1-11.3, and c₂ is 5 g/L-8 g/L. By adjusting the ammonia concentration and pH of the reaction base solutions, it is conducive to precisely controlling the stable progress of the reactions.

In one embodiment, under a protective atmosphere with an oxygen content smaller than 0.1% and a pressure of 0.2 MPa-0.7 MPa, the ammonia aqueous solution and the sodium hydroxide solution are mixed at a stirring speed of 450 r/min-500 r/min under a temperature of 50 °C-60 °C to form the first reaction base solution.

In one embodiment, under a protective atmosphere with an oxygen content smaller than 0.1% and a pressure of 0.2 MPa-0.7 MPa, the ammonia aqueous solution and the sodium hydroxide solution are mixed at a stirring speed of 350 r/min-400 r/min under a temperature of 40 °C-50 °C to form the second reaction base solution.

In steps S3 to S5, synergistic control of the ammonia concentration, the flow rate of the mixed salt solution, and the reaction temperature in the three stage reactions enables the primary sheet-like material produced to form three different spatial structures from inner to outer. The resulting precursor by the three stage reactions has a unique structure in which the inner core and outer shell are compact and the intermediate layer is loose, while the precursor has a high specific surface area of 10 m²/g to 20 m²/g. Moreover, the preparation method provided by the present application has a reaction process that is simple to operate, easy to control, highly reproducible, and holds broad application prospects.

In one embodiment, a pH of the first reaction base solution in the first reaction is greater than a pH of the second reaction base solution in the second reaction; and/or a pH of the reaction solution at an end of the second reaction is equal to a pH of the reaction solution in the third reaction. By adjusting the pH relationship at the respective stages in the three-stage reactions, it is conducive to precisely controlling the morphology and size of the product, thereby further optimizing the spatial structure of the precursor.

In one embodiment, a stirring speed in the first reaction is greater than a stirring speed in the second reaction; and/or the stirring speed in the second reaction is greater than a stirring speed in the third reaction. By adjusting the relationship of the stirring speeds at the respective stages of the three stage reactions, it is conducive to precisely controlling the morphology and size of the product, thereby further optimizing the spatial structure of the precursor.

Preferably, in the step of the first reaction, T₁ is 55 °C-60 °C, the stirring speed is 400 r/min-500 r/min, the reaction solution has a pH of 11.5-12.3. By adjusting the temperature, pH, and stirring speed in the first reaction, it is conducive to precisely controlling the inner core to form a structure having a plurality of layers of the primary sheet-like material and ensuring that the diameter of the inner core reaches 3 µm-7 µm.

Further preferably, in the step of the first reaction, the pH of the reaction solution is first maintained at 12.1-12.3 for 1-4 hours, then is reduced to 11.5-11.8 over 6-8 hours; the stirring speed is first maintained at 450 r/min-500 r/min for 5-10 hours, then is reduced to 400 r/min-450 r/min. This is conducive to precisely controlling the inner core to form a structure having a plurality of layers of the primary sheet-like material.

It should be noted that the present application does not limit the sequence of the first reaction and the preparation of the second reaction base solution. The second reaction base solution may be prepared first, and then the first reaction is performed, or the first reaction may be performed first and then the second reaction base solution is prepared.

It is understood that when the first reaction precedes the preparation of the second reaction base solution, the second reaction base solution may be prepared first, and then the second reaction is performed. Alternatively, the inner core may be directly mixed with the ammonia aqueous solution and the sodium hydroxide solution to form a mixed dispersion solution for the second reaction. Since the presence of the inner core has a minimal effect on the ammonia concentration and pH of the reaction, the pH of the reaction solution at the beginning of the step of the second reaction is considered as the pH of the second reaction base solution.

Preferably, in the step of the second reaction, T₂ is 40 °C-50 °C, the stirring speed is 200 r/min-350 r/min, the pH of the reaction solution at the end of the reaction is 10.5-10.6. More preferably, the pH of the reaction solution is reduced to 10.5-10.6 over 20 hours, and a solid content is 10 g/L-100 g/L. By adjusting the temperature, pH, stirring speed, and solid content in the second reaction, it is conducive to precisely controlling the intermediates to form a unique structure with a compact inner core and a loose surface layer, and ensuring that the diameter of the intermediates reaches 5 µm-12 µm.

It should be noted that in the process of the second reaction, the stirring speed may be precisely adjusted based on the particle size of the reaction product, and the present application is not limited thereto.

Preferably, in the step of the third reaction, T₃ is 50 °C-55 °C, the stirring speed is 180 r/min-200 r/min, the reaction solution has a pH of 10.5-10.6. Specifically, the temperature is increased from T₂ to T₃ over 10 hours, while the ammonia concentration is reduced from c₂ to c₁ over 10 hours. This is conducive to precisely controlling the positive electrode material precursor to form a unique structure with compact inner core and outer shell, and a loose intermediate layer, and ensuring that the diameter of the positive electrode material precursor reaches 7 µm-20 µm.

In one embodiment, the above reaction processes are performed under a protective atmosphere with an oxygen content less than or equal to 0.1% and a pressure of 0.2 MPa-0.7 MPa.

In one embodiment, the resulting product by the third reaction undergoes processes including aging, washing and press-filtering, drying, sieving, demagnetizing, and packaging, ultimately yielding the positive electrode material precursor product.

The present application provides a positive electrode material that is prepared from the positive electrode material precursor as described above. The positive electrode material described in the present application has a stable crystal structure and high yield rate. It is resistant to undesirable phenomena such as crystal particle cracking during the process of charging and discharging, thereby enhancing the cycle stability and rate capability of the battery.

It should be noted that the present application has no limitation on the preparation method for the positive electrode material, which may be produced using conventional sintering processes.

The present application further provides a positive electrode sheet, including a positive electrode current collector and a positive electrode material layer provided on a surface of the positive electrode current collector, where the positive electrode material layer includes the positive electrode material of the present application.

In one embodiment, the positive electrode current collector may include a metal foil or a composite current collector. For example, an aluminum foil may be used as the metal foil. The composite current collector includes a polymeric material substrate and a metal layer formed on at least one surface of the polymeric material substrate. The composite current collector may be formed by forming a metallic material onto the polymeric material substrate. Optionally, the metallic material may include, but is not limited to, at least one of aluminum, an aluminum alloy, nickel, a nickel alloy, titanium, a titanium alloy, silver, and a silver alloy. Optionally, the polymeric material substrate includes, but is not limited to, at least one of polypropylene (PP), polyethylene terephthalate (PET), polybutylene terephthalate (PBT), polystyrene (PS), and polyethylene (PE).

In one embodiment, the positive electrode material layer is primarily composed of the positive electrode material of the present application, a binder, and a conductive agent. Optionally, the conductive agent includes, but is not limited to, at least one of carbon black, carbon nanotubes, graphene, and carbon nanofibers, where carbon black includes super-conductive carbon, acetylene black, or Kochin black.

It should be noted that the present application has no limitation on the preparation method of the positive electrode sheet, which may be prepared using conventional processes, for example, dispersing the positive electrode material, a conductive agent, a binder, and any other components in a solvent to form a positive electrode slurry; coating the positive electrode slurry onto a positive electrode current collector; and performing drying, cold pressing, and other processes to obtain the positive electrode sheet. Optionally, the solvent may include, but is not limited to, N-methylpyrrolidone.

The present application provides a battery, including the positive electrode sheet as described above. It is understood that the battery is primarily composed of a positive electrode sheet, a negative electrode sheet, a separator, and an electrolyte solution. Where, the negative electrode sheet, separator, and electrolyte solution may adopt any conventional commercially available negative electrode sheets or negative electrode materials, separators, and electrolyte solutions, and the present application has no limitation thereto. The battery includes, but is not limited to, lithium-ion batteries, sodium-ion batteries, and the like.

The following will further illustrate the positive electrode material precursor and preparation method and application thereof through specific examples. However, those skilled in the art will understand that the examples below are provided only for illustrative purpose and should not be regarded as limiting the scope of the present application. For embodiments where specific conditions are not specified, the conditions are conducted under conventional conditions or conditions recommended by manufacturers. Reagents or instruments where manufacturers are not specified are conventional products that are commercially available.

### Example 1

(1) an ammonia aqueous solution with a concentration of 10 mol/L, a sodium hydroxide solution with a concentration of 10 mol/L, and a mixed salt solution with a concentration of 2 mol/L are prepared, where the mixed salt solution is prepared by dissolving soluble nickel sulfate, soluble cobalt sulfate, and soluble manganese sulfate in water at a molar ratio of Ni:Co:Mn = 92:4:4.
(2) under a nitrogen atmosphere, 0.1% oxygen content and 0.2 MPa pressure are maintained in a reaction vessel; the ammonia aqueous solution and sodium hydroxide solution are introduced into the reaction vessel at 55°C and is stirred at 460 r/min to form a first reaction base solution, where the first reaction base solution has an ammonia concentration of 3.5 g/L and a pH of 12.3.
(3) the mixed salt solution, the sodium hydroxide solution, and the ammonia aqueous solution are co-currently introduced into the reaction vessel including the first reaction base solution at 55 °C; the pH of the reaction solution is first maintained at 12.3 for 3 hours, then is reduced to 11.6 over 8 hours, simultaneously the stirring speed is maintained at 460 r/min for 8 hours, then is reduced to 420 r/min; the ammonia concentration is maintained at 3.5 g/L with no change during the reaction process; a flow rate of the mixed salt solution is 300 L/h; a reaction product grows to a target particle size of 5 µm, then the reaction is stopped.
(4) the reaction product is transferred to another reaction vessel, and the ammonia aqueous solution and the sodium hydroxide solution are introduced thereto at 46 °C and stirred and mixed at 350 r/min to achieve a solid content of 60 g/L, a pH of 11.1, and an ammonia concentration of 6 g/L.
(5) the mixed salt solution, the sodium hydroxide solution, and the ammonia aqueous solution are co-currently introduced into the reaction vessel at 46 °C; the pH is controlled to decrease from 11.1 to 10.5 over 20 hours, an ammonia concentration is maintained at 6 g/L with no change during the reaction process, and the flow rate of the mixed salt solution is 1200 L/h; the stirring speed is 300 r/min, while the reaction product grows to a particle size of approximately 5.5 ± 0.5 µm; then the stirring speed is 250 r/min, while the reaction product grows to a particle size of approximately 6.5 ± 0.5 µm; then the stirring speed is 200 r/min, while the reaction product grows to a particle size of approximately 7.5 ± 0.5 µm, and then the reaction product grows until it reaches a target particle size of 8 µm.
(6) the mixed salt solution, sodium hydroxide solution, and ammonia aqueous solution continue to be co-currently introduced into the reaction vessel; the pH of the reaction solution is maintained at 10.5 with no change, the temperature is increased from 46 °C to 50 °C over 10 hours, the ammonia concentration is reduced from 6 g/L to 3.5 g/L over 10 hours, the flow rate of the mixed salt solution is 500 L/h, and the stirring speed is 180 r/min; the reaction product grows to a target particle size of 10 µm and then the reaction is stopped.
(7) the reaction product is subjecting to processes of aging, washing and press-filtering, drying, sieving, demagnetizing, and packaging to obtain a positive electrode material precursor, whose chemical formula is Ni_{0.92}Co_{0.04}Mn_{0.04}(OH)₂.

### Example 2

Example 2 differs from Example 1 in that the solid content is 40 g/L in step (4), and the flow rate of the mixed salt solution is 1300 L/h in step (5).

### Example 3

Example 3 differs from Example 1 in that the target particle size is 7 µm in step (3), the solid content is 20 g/L in step (4), and the flow rate of the mixed salt solution is 1500 L/h in step (5).

### Example 4

(1) an ammonia aqueous solution with a concentration of 5 mol/L, a sodium hydroxide solution with a concentration of 9 mol/L, and a mixed salt solution with a concentration of 1.5 mol/L are prepared, where the mixed salt solution is prepared by dissolving soluble nickel sulfate, soluble cobalt sulfate, and soluble manganese sulfate in water at a molar ratio of Ni:Co:Mn = 90:5:5.
(2) under a nitrogen atmosphere, 0.005% oxygen content and 0.3 MPa pressure are maintained in a reaction vessel; the ammonia aqueous solution and sodium hydroxide solution are introduced into the reaction vessel at 58°C and is stirred at 480 r/min to form a first reaction base solution, where the first reaction base solution has an ammonia concentration of 3.8 g/L and a pH of 12.2.
(3) the mixed salt solution, the sodium hydroxide solution, and the ammonia aqueous solution are co-currently introduced into the reaction vessel including the first reaction base solution at 58 °C; the pH of the reaction solution is first maintained at 12.2 for 2 hours, then is reduced to 11.7 over 6 hours, simultaneously the stirring speed is maintained at 480 r/min for 6 hours, then is reduced to 430 r/min; the ammonia concentration is maintained at 3.8 g/L with no change during the reaction process; a flow rate of the mixed salt solution is 400 L/h; a reaction product grows to a target particle size of 4.5 µm, then the reaction is stopped.
(4) the reaction product is transferred to another reaction vessel, and the ammonia aqueous solution and the sodium hydroxide solution are introduced thereto at 45 °C and stirred and mixed at 300 r/min to achieve a solid content of 30 g/L, a pH of 11.2, and an ammonia concentration of 7 g/L.
(5) the mixed salt solution, the sodium hydroxide solution, and the ammonia aqueous solution are co-currently introduced into the reaction vessel at 45 °C; the pH is controlled to decrease from 11.2 to 10.6 over 20 hours, an ammonia concentration is maintained at 7 g/L with no change during the reaction process, and the flow rate of the mixed salt solution is 1300 L/h; the stirring speed is 280 r/min, while the reaction product grows to a particle size of approximately 5.5 ± 0.5 µm; then the stirring speed is 240 r/min, while the reaction product grows to a particle size of approximately 6.5 ± 0.5 µm; then the stirring speed is 220 r/min, while the reaction product grows to a particle size of approximately 7.5 ± 0.5 µm, and then the reaction product grows until it reaches a target particle size of 8.3 µm.
(6) the mixed salt solution, sodium hydroxide solution, and ammonia aqueous solution continue to be co-currently introduced into the reaction vessel; the pH of the reaction solution is maintained at 10.6 with no change, the temperature is increased from 45 °C to 52 °C over 10 hours, the ammonia concentration is reduced from 7 g/L to 3.8 g/L over 10 hours, the flow rate of the mixed salt solution is 600 L/h, and the stirring speed is 190 r/min; the reaction product grows to a target particle size of 11 µm and then the reaction is stopped.
(7) the reaction product is subjecting to processes of aging, washing and press-filtering, drying, sieving, demagnetizing, and packaging to obtain a positive electrode material precursor, whose chemical formula is Ni_{0.9}Co_{0.05}Mn_{0.05}(OH)₂.

### Example 5

(1) an ammonia aqueous solution with a concentration of 15 mol/L, a sodium hydroxide solution with a concentration of 12 mol/L, and a mixed salt solution with a concentration of 2.5 mol/L are prepared, where the mixed salt solution is prepared by dissolving soluble nickel sulfate, soluble cobalt sulfate, and soluble manganese sulfate in water at a molar ratio of Ni:Co:Mn = 88:9:3.
(2) under a nitrogen atmosphere, 0.04% oxygen content and 0.5 MPa pressure are maintained in a reaction vessel; the ammonia aqueous solution and sodium hydroxide solution are introduced into the reaction vessel at 60°C and is stirred at 500 r/min to form a first reaction base solution, where the first reaction base solution has an ammonia concentration of 4 g/L and a pH of 12.1.
(3) the mixed salt solution, the sodium hydroxide solution, and the ammonia aqueous solution are co-currently introduced into the reaction vessel including the first reaction base solution at 60 °C; the pH of the reaction solution is first maintained at 12.1 for 3 hours, then is reduced to 11.8 over 7 hours, simultaneously the stirring speed is maintained at 500 r/min for 5 hours, then is reduced to 440 r/min; the ammonia concentration is maintained at 4 g/L with no change during the reaction process; a flow rate of the mixed salt solution is 380 L/h; a reaction product grows to a target particle size of 5.5 µm, then the reaction is stopped.
(4) the reaction product is transferred to another reaction vessel, and the ammonia aqueous solution and the sodium hydroxide solution are introduced thereto at 43 °C and stirred and mixed at 280 r/min to achieve a solid content of 70 g/L, a pH of 11.3, and an ammonia concentration of 8 g/L.
(5) the mixed salt solution, the sodium hydroxide solution, and the ammonia aqueous solution are co-currently introduced into the reaction vessel at 43 °C; the pH is controlled to decrease from 11.3 to 10.55 over 20 hours, an ammonia concentration is maintained at 8 g/L with no change during the reaction process, and the flow rate of the mixed salt solution is 1000 L/h; the stirring speed is 320 r/min, while the reaction product grows to a particle size of approximately 5.5 ± 0.5 µm; then the stirring speed is 280 r/min, while the reaction product grows to a particle size of approximately 6.5 ± 0.5 µm; then the stirring speed is 240 r/min, while the reaction product grows to a particle size of approximately 7.5 ± 0.5 µm, and then the reaction product grows until it reaches a target particle size of 8.5 µm.
(6) the mixed salt solution, sodium hydroxide solution, and ammonia aqueous solution continue to be co-currently introduced into the reaction vessel; the pH of the reaction solution is maintained at 10.55 with no change, the temperature is increased from 43 °C to 53 °C over 10 hours, the ammonia concentration is reduced from 8 g/L to4 g/L over 10 hours, the flow rate of the mixed salt solution is 700 L/h, and the stirring speed is 200 r/min; the reaction product grows to a target particle size of 12 µm and then the reaction is stopped.
(7) the reaction product is subjecting to processes of aging, washing and press-filtering, drying, sieving, demagnetizing, and packaging to obtain a positive electrode material precursor, whose chemical formula is Ni_{0.88}Co_{0.09}Mn_{0.03}(OH)₂.

### Example 6

Example 6 differs from Example 1 in that the molar ratio of Ni:Co:Mn in the mixed salt solution is 3:1:1. The chemical formula of the prepared precursor is Ni_{0.6}Co_{0.2}Mn_{0.2}(OH)₂.

### Example 7

Example 7 differs from Example 1 in that the flow rate of the mixed salt solution is 250 L/h, and the ammonia concentration is 3.8 g/L in step (3), and the flow rate of the mixed salt solution is 450 L/h, and the ammonia concentration is 3.8 g/L in step (6).

### Example 8

Example 8 differs from Example 1 in that the stirring speed is first maintained at 420 r/min for 8 hours, then is reduced to 400 r/min, and the flow rate of the mixed salt solution is 400 L/h in step (3).

### Example 9

Example 9 differs from Example 1 in that the solid content is 30 g/L in step (4), and the flow rate of the mixed salt solution is 1400 L/h in step (5).

### Example 10

Example 10 differs from Example 1 in that the flow rate of the mixed salt solution is 800 L/h in step (6).

### Comparative Example 1

Comparative Example 1 differs from Example 1 in that the ammonia concentration is 3.5 g/L and the temperature is 55°C in step (4); the ammonia concentration is 3.5 g/L, the temperature is 55°C, and the flow rate of the mixed salt solution is 600 L/h in step (5).

### Comparative Example 2

Comparative Example 2 differs from Example 1 in that step (4) is omitted; after the step (3), the mixed salt solution, sodium hydroxide solution, and ammonia aqueous solution are directly co-currently introduced into the reaction vessel at 46 °C, the pH is controlled to be reduced from 11.6 to 10.5 over 20 hours, then the step (5) is performed.

### Comparative Example 3

Comparative Example 3 differs from Example 1 in that the same raw materials are used; the first reaction is performed under the conditions of the steps (4) and (5) to obtain a reaction product with a particle size of 5 µm; then the second reaction is performed under the conditions of the step (6) to obtain a reaction product with a particle size of 8 µm; finally, the third reaction is performed under the conditions of the steps (2) and (3) to obtain a reaction product with a particle size of 12 µm.

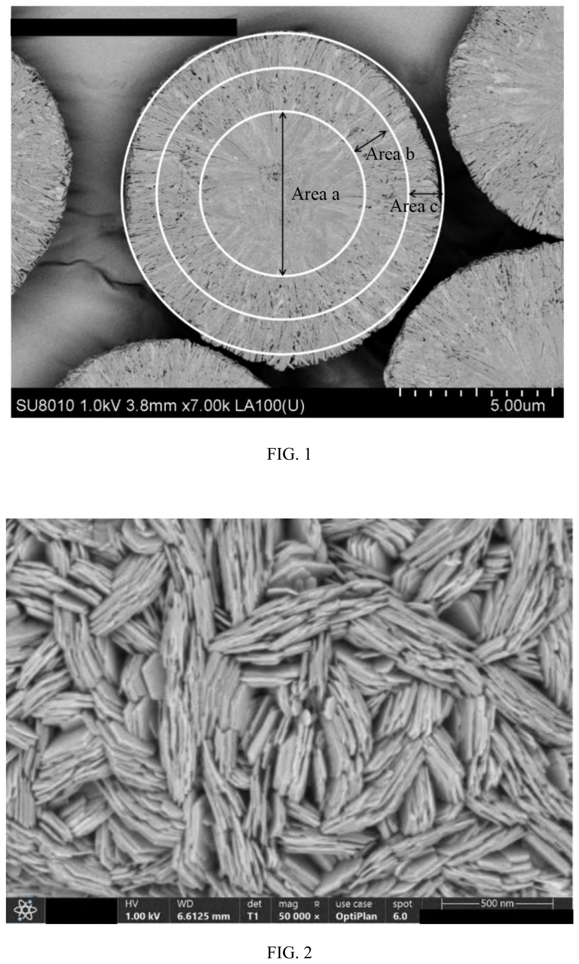

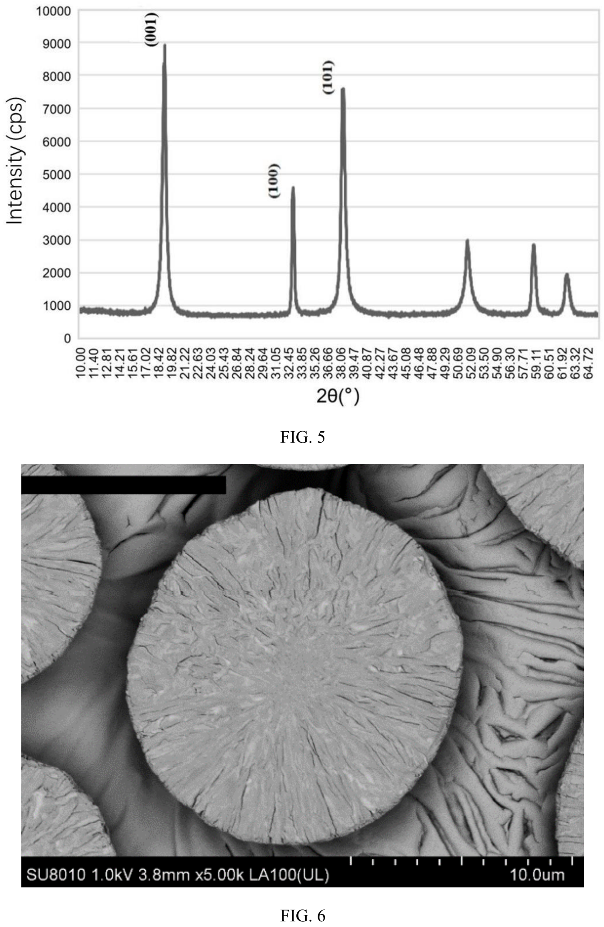

The precursors prepared in Examples 1 to 10 and Comparative Examples 1 to 3 are characterized and tested, and the results are shown in FIGS. 1, 5, 6 and Table 1.

**Table 1**

| | Specific area (m²/g) | Porosity (%) | Diameter (µm) | I(001) (cps) | D(001) (nm) | I(101) (cps) | D(101) (nm) | I (100) (cps) | D(100) (nm) |
|---|---|---|---|---|---|---|---|---|---|
| Example 1 | 11.50 | 5.30 | 10 | 8938 | 14.16 | 7585 | 12.69 | 4517 | 34.61 |
| Example 2 | 13.20 | 6.20 | 15 | 7596 | 13.62 | 7025 | 12.67 | 4363 | 32.71 |
| Example 3 | 14.60 | 7.70 | 17 | 8981 | 14.31 | 8835 | 14.15 | 5555 | 38.97 |
| Example 4 | 14.30 | 7.10 | 11 | 7543 | 13.21 | 7853 | 12.14 | 4564 | 34.15 |
| Example 5 | 13.50 | 6.50 | 12 | 7685 | 12.85 | 8120 | 13.15 | 5431 | 36.21 |
| Example 6 | 13.20 | 6.40 | 10 | 8642 | 13.95 | 7578 | 12.43 | 4568 | 35.12 |
| Example 7 | 10.89 | 5.01 | 10 | 9213 | 14.68 | 7895 | 12.98 | 4687 | 35.87 |
| Example 8 | 13.40 | 5.63 | 10 | 8431 | 13.89 | 7654 | 12.34 | 4457 | 34.15 |
| Example 9 | 14.20 | 7.20 | 10 | 8354 | 13.75 | 7465 | 12.41 | 4443 | 33.45 |
| Example 10 | 13.20 | 6.34 | 10 | 8124 | 13.54 | 7642 | 12.35 | 4875 | 34.62 |
| Comparative Example 1 | 7.80 | 4.10 | 15 | 5803 | 11.31 | 5376 | 10.46 | 3912 | 33.27 |
| Comparative Example 2 | 5.50 | 3.20 | 10 | 8951 | 14.56 | 7985 | 13.89 | 6541 | 39.51 |
| Comparative Example 3 | 15.30 | 8.10 | 12 | 6531 | 10.36 | 6941 | 10.51 | 3849 | 29.87 |

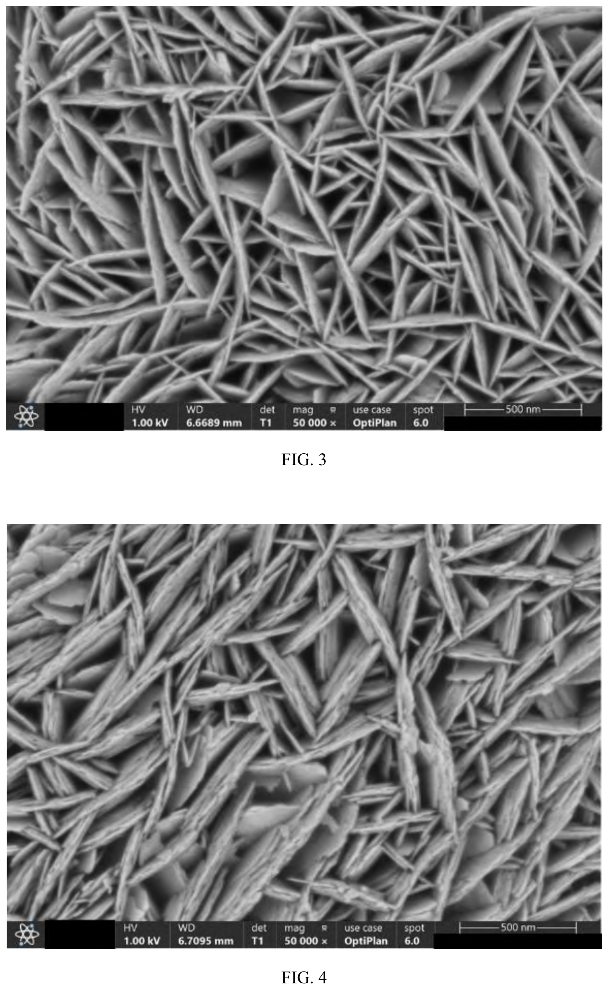

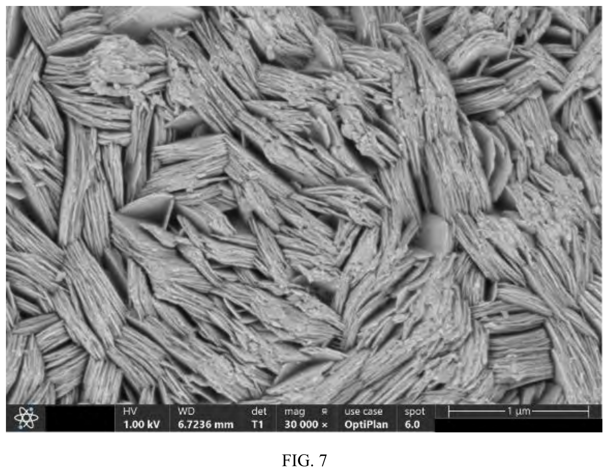

The reaction products obtained at respective steps during the preparation processes of Examples 1 to 10 and Comparative Examples 1 to 3 are characterized and tested. The results are shown in FIGS. 2, 3, 4, 7 and Table 2. It should be noted that the thickness and layer number of each sheet-like material in Table 2 refer to an average thickness and an average layer number, that is 10 areas of each sheet-like material are randomly selected in an electron microscope image, and its average thickness and average layer number are determined.

**Table 2**

| | First sheet-like material in inner core | | Thickness of primary sheet-like material in intermediate layer (nm) | Second sheet-like material in outer shell | | Porosity (%) | | | Diameter of inner core (µm) | Thickness of intermediate layer (µm) | Thickness of Outer shell (µm) |
|---|---|---|---|---|---|---|---|---|---|---|---|
| | Thickness (nm) | Layer number (layers) | | Thickness (nm) | Layer number (layers) | Inner core | Interm ediate layer | Outer shell | | | |
| Example 1 | 142 | 6 | 55 | 85 | 2 | 1.75 | 10.56 | 6.65 | 5.0 | 1.5 | 1.00 |
| Example 2 | 142 | 6 | 50 | 90 | 2 | 1.75 | 11.23 | 6.25 | 5.0 | 1.5 | 3.50 |
| Example 3 | 148 | 7 | 53 | 92 | 2 | 1.78 | 11.57 | 7.32 | 7.0 | 2.5 | 2.50 |
| Example 4 | 155 | 7 | 56 | 108 | 3 | 1.25 | 11.41 | 5.67 | 4.5 | 1.9 | 1.35 |
| Example 5 | 162 | 8 | 58 | 112 | 4 | 1.13 | 11.33 | 5.52 | 5.5 | 1.5 | 1.75 |
| Example 6 | 136 | 5 | 49 | 79 | 3 | 1.82 | 11.12 | 6.78 | 5.0 | 1.5 | 1.00 |
| Example 7 | 158 | 7 | 56 | 125 | 5 | 1.68 | 10.65 | 5.89 | 5.0 | 1.5 | 1.00 |
| Example 8 | 132 | 5 | 47 | 88 | 2 | 2.15 | 10.89 | 6.35 | 5.0 | 1.5 | 1.00 |
| Example 9 | 142 | 6 | 45 | 81 | 2 | 1.75 | 12.42 | 6.84 | 5.0 | 1.5 | 1.00 |
| Example 10 | 142 | 6 | 55 | 75 | 2 | 1.75 | 10.56 | 8.93 | 5.0 | 1.5 | 1.00 |
| Comparative Example 1 | 142 | 6 | / | 360 | 8 | 1.75 | 2.03 | 2.32 | 5.0 | 1.5 | 3.50 |
| Comparative Example 2 | 142 | 6 | 112 | 300 | 9 | 1.75 | 2.35 | 1.95 | 5.0 | 1.5 | 1.00 |
| Comparative Example 3 | 72 | 2 | / | 280 | 6 | 13.52 | 4.58 | 3.21 | 5.0 | 1.5 | 2.00 |

As shown in FIGS. 1 to 7 and Tables 1 and 2, each of the precursors prepared in Examples 1 to 10 has a unique structure with compact inner core and outer shell and a loose intermediate layer, and with a large specific surface area. However, in Comparative Example 1, since the ammonia concentration and temperature in the steps (4) and (5) are maintained unchanged, and the flow rate of the mixed salt solution in the step (5) is only 600 L/h, the resulting precursor has a compact interior, and a surface having a plurality of layers of the sheet-like material having an excessive thickness, leading to a smaller specific surface area of the precursor. In Comparative Example 2, the step (4) is omitted, the growth of crystal particles of the intermediate layer and outer layer is slow, leading to compact structures of the inner core, intermediate layer, and outer layer, and a small specific surface area. In Comparative Example 3, since preparation conditions are different, the inner core is formed by accumulating two layers of the sheet-like material with an average thickness of approximately 72 nm, and thus is a loose structure, while the intermediate layer and outer shell are formed by accumulating a plurality of layers of the primary sheet-like material with average thicknesses of approximately 132 nm and 280 nm, respectively, and thus are compact structures.

The precursors prepared in Examples 1 to 10 and Comparative Examples 1 to 3 are prepared into positive electrode materials and assembled into batteries for electrical performance testing.

The preparation method for a positive electrode material is mixing lithium hydroxide and the positive electrode precursor, and then sintering at 430 °C for 4 hours and then sintering at 800 °C for 14 hours to obtain the positive electrode material, where a ratio of a molar amount of lithium element in the lithium hydroxide to a total molar amount of transition metal elements in the positive electrode material precursor is 1.1:1.

The preparation method for a battery is that the positive electrode material, a conductive agent carbon black (SP), and a binder polyvinylidene fluoride (PVDF) are mixed at a mass ratio of 92:4:4, and coated onto two functional surfaces of an aluminum foil to form a positive electrode material layer, yielding a positive electrode sheet; hard carbon, the conductive agent SP, and the binder PVDF are mixed at a mass ratio of 4:4:92, and coated onto two functional surfaces of a copper foil to form a negative electrode material layer, yielding a negative electrode sheet; the positive electrode sheet, a separator, and the negative electrode sheet are stacked to obtain an electrode assembly, and the electrode assembly is placed in an aluminum-plastic film, and a commercial NaPF₆ electrolyte solution is injected therein to obtain the battery.

Test methods and conditions are as follows: tap density is measured using a tapped density tester; sintering yield refers to a proportion of the number of products meeting quality requirements to a total number of products after sintering treatment; rate capability refers to a capacity retention rate under a high-rate charging and discharging, corresponding to a discharging capacity at 1C rate in test results; cycle stability is a proportion of a capacity after 100 cycles to an initial capacity at 0.2C, the test voltage is 2.8V-4.2V, and the temperature is 25 °C. The test results are shown in Table 3.

**Table 3**

| | Tap density (g/cm³) | Sintering yield (%) | Rate capability (mAh/g) | Cycle stability (%) |
|---|---|---|---|---|
| Example 1 | 2.05 | 95.6 | 196.8 | 91.2 |
| Example 2 | 2.15 | 96.2 | 198.2 | 90.8 |
| Example 3 | 2.26 | 94.8 | 201.2 | 92.1 |
| Example 4 | 2.03 | 95.3 | 199.5 | 90.5 |
| Example 5 | 2.08 | 96.3 | 201.8 | 91.5 |
| Example 6 | 2.01 | 96.2 | 195.2 | 90.8 |
| Example 7 | 2.12 | 94.3 | 194.5 | 91.5 |
| Example 8 | 2.01 | 93.2 | 193.2 | 90.8 |
| Example 9 | 2.01 | 92.5 | 192.8 | 90.6 |
| Example 10 | 2.03 | 91.8 | 193.1 | 90.2 |
| Comparative Example 1 | 2.45 | 85.3 | 185.4 | 85.6 |
| Comparative Example 2 | 2.51 | 83.2 | 179.5 | 84.3 |
| Comparative Example 3 | 1.84 | 82.5 | 180.2 | 82.5 |

As shown in Table 3, each of the precursors prepared in Examples 1 to 10 has a high tap density; the resulting positive electrode material by sintering has a high sintering yield, and excellent cycle stability and rate capability can be achieved when used in a battery. In contrast, each of the precursors prepared in Comparative Examples 1 to 2, although having a high tap density, has a smaller specific surface area, and thus this leads to cracking during sintering due to stress, resulting in a low yield of the sintered positive electrode material, and rate capability and cycle stability are poor. The precursor prepared according to Comparative Example 3 exhibits a loose inner core, and compact intermediate layer and outer shell, resulting in a small tap density, and the resulting positive electrode material by sintering has a poor yield, and thus rate capability and cycle stability decrease.

The technical features described in the above embodiments may be combined in any way. For the sake of brevity, not all possible combinations of the technical features in the above embodiments are described. However, any combination of these technical features that does not conflict with one another should be considered within the scope of this specification.

The above embodiments merely illustrate several implementation methods of the present application, are described in a relatively specific and detailed manner. However, this should not be construed as limiting the scope of the invention. It should be noted that those skilled in the art may make various modifications and improvements without departing from the concept of the present application, all of which fall within the scope of protection of the present application. Therefore, the scope of protection of the present patent application shall be determined by the appended claims.

## Claims

1. A positive electrode material precursor, wherein the positive electrode material precursor is a core-shell structure, comprising an inner core, an outer shell, and an intermediate layer provided between the inner core and the outer shell;
wherein the inner core is formed by accumulating a first sheet-like material, and the first sheet-like material is formed by stacking a plurality of layers of a primary sheet-like material;
the intermediate layer is formed by accumulating the primary sheet-like material;
the outer shell is formed by accumulating a second sheet-like material, and the second sheet-like material is formed by stacking a plurality of layers of the primary sheet-like material, and a layer number of the layers of the primary sheet-like material in the second sheet-like material is less than a layer number of the layers of the primary sheet-like material in the first sheet-like material;
the positive electrode material precursor has a specific surface area of 10m²/g-20m²/g.

2. The positive electrode material precursor according to claim 1, wherein the layer number of the layers of the primary sheet-like material in the first sheet-like material is greater than or equal to 5.

3. The positive electrode material precursor according to claim 1, wherein a porosity of the inner core is less than a porosity of the outer shell, and the porosity of the outer shell is less than a porosity of the intermediate layer.

4. The positive electrode material precursor according to claim 3, wherein the positive electrode material precursor satisfies at least one of the following conditions:
(1) the positive electrode material precursor has a porosity of 5%-10%;
(2) the porosity of the inner core is less than or equal to 2%;
(3) the porosity of the intermediate layer is 10%-12%; and
(4) the porosity of the outer shell is 5%-8%.

5. The positive electrode material precursor according to claim 1, wherein the positive electrode material precursor further satisfies at least one of the following conditions:
(1) the first sheet-like material has an average thickness of 130nm-170nm;
(2) the primary sheet-like material in the intermediate layer has an average thickness of less than or equal to 60 nm;
(3) the second sheet-like material has an average thickness of 70 nm-120 nm;
(4) the inner core has a diameter of 3 µm-7 µm;
(5) the intermediate layer has a thickness of 1 µm-2.5 µm;
(6) the outer shell has a thickness of 1 µm-4 µm; and
(7) the positive electrode material precursor has a diameter of 7 µm-20 µm.

6. The positive electrode material precursor according to claim 1, wherein in an X-ray diffraction pattern of the positive electrode material precursor, at least one of the following conditions is satisfied:
(1) a (001) crystal plane has a diffraction peak intensity of greater than or equal to 7000 cps, and along a direction perpendicular to the (001) crystal plane, crystal particles of the positive electrode material precursor have an average size of greater than or equal to 10 nm;
(2) a (101) crystal plane has a diffraction peak intensity of greater than or equal to 7000 cps, and along a direction perpendicular to the (101) crystal plane, the crystal particles of the positive electrode material precursor have an average size of greater than or equal to 10 nm; and
(3) a (100) crystal plane has a diffraction peak intensity of greater than or equal to 4000 cps, and along a direction perpendicular to the (100) crystal plane, the crystal particles of the positive electrode material precursor have an average size of greater than or equal to 25 nm.

7. The positive electrode material precursor according to any one of claims 1 to 6, wherein the positive electrode material precursor has a chemical formula of NiₓCo_{y}Mn_{z}(OH)₂, where 0.5≤x≤0.95, 0≤y≤0.25, 0≤z≤0.25, x+y+z=1, and y and z are not all zero.

8. A preparation method for the positive electrode material precursor according to any one of claims 1 to 7, comprising the following steps:
preparing an ammonia aqueous solution, a sodium hydroxide solution, and a mixed salt solution;
mixing the ammonia aqueous solution and the sodium hydroxide solution to separately obtain a first reaction base solution and a second reaction base solution, wherein ammonia concentrations of the first reaction base solution and the second reaction base solution are c₁ and c₂, respectively, and c₁ < c₂;
co-currently introducing the ammonia aqueous solution, the sodium hydroxide solution and the mixed salt solution into the first reaction base solution to perform a first reaction to obtain the inner core, wherein the mixed salt solution has a flow rate of 200 L/h-400 L/h, a reaction solution in the first reaction has an ammonia concentration of c₁, and a reaction temperature is T₁;
mixing the inner core with the second reaction base solution, and co-currently introducing the ammonia aqueous solution, the sodium hydroxide solution and the mixed salt solution to perform a second reaction to obtain an intermediate, wherein the mixed salt solution has a flow rate of 1000 L/h-1500 L/h, a reaction solution in the second reaction has an ammonia concentration of c₂, and a reaction temperature is T₂;
further co-currently introducing the ammonia aqueous solution, the sodium hydroxide solution and the mixed salt solution to perform a third reaction to obtain the positive electrode material precursor, wherein the mixed salt solution has a flow rate of 400 L/h-800 L/h, a reaction solution in the third reaction has an ammonia concentration of c₁, a reaction temperature is T₃, and T₂ < T₃ < T₁.

9. The preparation method for the positive electrode material precursor according to claim 8, wherein the first reaction, the second reaction, and the third reaction satisfy at least one of the following conditions:
(1) a pH of the first reaction base solution is greater than a pH of the second reaction base solution;
(2) a pH of the reaction solution in the first reaction is greater than a pH of the reaction solution in the second reaction;
(3) a pH of the reaction solution at an end of the second reaction is equal to a pH of the reaction solution in the third reaction;
(4) a stirring speed in the first reaction is greater than a stirring speed in the second reaction;
(5) the stirring speed in the second reaction is greater than a stirring speed in the third reaction.

10. The preparation method for the positive electrode material precursor according to claims 8 or 9, wherein the preparation method satisfies at least one of the following conditions:
(1) the first reaction base solution has a pH of 12.1-12.3, and c₁ is 1 g/L-4 g/L;
(2) the second reaction base solution has a pH of 11.1-11.3, and c₂ is 5 g/L-8 g/L;
(3) in the step of the first reaction, T₁ is 55 °C-60 °C, the stirring speed is 400 r/min-500 r/min, the reaction solution has a pH of 11.5-12.3, and the inner core has a diameter of 3 µm-7 µm;
(4) in the step of the second reaction, T₂ is 40 °C-50 °C, the stirring speed is 200 r/min-350 r/min, the reaction solution has a pH of 10.5-10.6 at the end of the reaction, and the intermediate has a diameter of 5 µm-12 µm;
(5) in the step of the third reaction, T₃ is 50 °C-55 °C, the stirring speed is 180 r/min-200 r/min, the reaction solution has a pH of 10.5-10.6, and the positive electrode material precursor has a diameter of 7 µm-20 µm.

11. The preparation method for the positive electrode material precursor according to any one of claims 8 to 10, wherein the preparation method further satisfies at least one of the following conditions:
(1) the ammonia aqueous solution has a concentration of 5 mol/L-15 mol/L;
(2) the sodium hydroxide solution has a concentration of 9 mol/L-12 mol/L;
(3) the mixed salt solution has a concentration of 1.5 mol/L-2.5 mol/L;
(4) in the step of the first reaction, the pH of the reaction solution is first maintained at 12.1-12.3 for 1-4 hours, and then is reduced to 11.5-11.8 over 6-8 hours;
(5) in a step of mixing the inner core with the second reaction base solution, a solid content is 10 g/L-100 g/L; and
(6) the preparation method is performed under a protective atmosphere, with an oxygen content of less than or equal to 0.1% and a pressure of 0.2 MPa-0.7 MPa.

12. A positive electrode material, wherein the positive electrode material is prepared from the positive electrode material precursor according to any one of claims 1 to 7.

13. A positive electrode sheet, comprising a positive electrode current collector and a positive electrode material layer provided on a surface of the positive electrode current collector, wherein the positive electrode material layer comprises the positive electrode material according to claim 12.

14. A battery, comprising the positive electrode sheet according to claim 13.
